# FASCICULE DE BREVET EUROPEEN

(11) **EP 1 007 749 B1**
(45) Date de publication et mention de la délivrance du brevet: **06.11.2002**
(21) Numéro de dépôt: 98940320.9
(22) Date de dépôt: 23.07.1998
(51) Int. Cl.: C22B 60/02, C22B 5/04, C22B 9/00, F27B 14/06, B22D 11/10, B22D 41/60, H05B 6/34, B22D 11/04, B22D 27/04, B22D 23/06

(54) **METALLOTHERMIE ET TIRAGE EN CONTINU, EN CREUSETS FROIDS INDUCTIFS, DE METAUX OU D'ALLIAGES**
METALLO-THERMISCHES VERFAHREN UND KONTINUIERLICHES ZIEHEN VON METALLEN ODER LEGIERUNGEN IN KALT-INDUKTIONSÖFEN
METALLOTHERMAL PROCESS AND CONTINUOUS DRAWING, IN COLD INDUCTION FURNACES, OF METALS OR ALLOYS

(30) Priorité: 25.07.1997 FR 9709500
(43) Date de publication de la demande: 14.06.2000
(73) Titulaire: COMPAGNIE GENERALE DES MATIERES NUCLEAIRES, F-78140 Velizy-Villacoublay Cédex (FR)
(72) Inventeur: PETIT, Jany, F-84830 Sérignan du Comtat (FR); PHILIPPE, Laurent, F-73420 Voglans (FR); HURBIN, Véronique, F-26130 Saint Paul Trois Châteaux (FR)
(74) Mandataire: Weber, Etienne Nicolas
(86) Numéro de dépôt international: FR9801630
(87) Numéro de publication internationale: WO99005330

(56) Documents cités:
- EP-A- 0 521 608
- FR-A- 2 002 771
- FR-A- 2 688 516
- FR-A- 2 708 725
- GB-A- 2 279 543
- US-A- 3 721 549
- US-A- 5 290 337
- JOHN D. LELAND: "Economically producing reactive metals by aerosol reduction" JOM, JOURNAL OF METALS, vol. 48, no. 10, octobre 1996, pages 52-55, XP002061287 WARRENDALE, USA cité dans la demande

## Description

### Domaine technique

La présente invention concerne la métallothermie et le tirage en continu, en creusets froids inductifs, de métaux ou d'alliages. Les métaux ou alliages sont élaborés à partir d'oxydes ou de sels métalliques. L'invention concerne en particulier la préparation d'uranium métal à partir d'un oxyde ou d'un sel d'uranium. Elle concerne également la préparation d'un alliage d'uranium et d'un autre métal.

### Etat de la technique antérieure

De manière classique, l'uranium métal est obtenu après transformation de l'oxyde UO₂ en UF₄, suivie d'une étape de réduction du tétrafluorure en uranium métal. Aucun procédé industriel actuel ne permet l'obtention directe de lingot d'uranium métal massif à partir du bioxyde. En effet, l'action sur le bioxyde d'uranium d'un métal réducteur comme Ca ou Mg, malgré sa très forte exothermicité, ne permet pas d'atteindre la fusion de la chaux ou de la magnésie et l'uranium métal est obtenu divisé dans un solide infusible. La scorie peut être dissoute dans un acide, mais le coût du traitement est prohibitif pour une production massive et le métal divisé risque d'être attaqué. Par contre, lors de la réduction de l'UF₄ par ces métaux, la scorie constituée de fluorite ou de sellaïte est relativement fusible. L'uranium est rassemblé in situ sous forme de lingot. Les scories génèrent un déchet solide, traité par voie humide avant son stockage définitif en décharge contrôlée.

Actuellement, les contraintes liées à la réduction des déchets implique la mise en oeuvre de procédés avec recyclage, par exemple par électrolyse.

Le brevet US-A-5 290 337 divulgue un procédé de réduction d'oxyde d'uranium par du magnésium permettant la récupération de l'uranium métal et la régénération du réducteur métallique. A l'instar de ce que préconisaient C. MORANVILLE et J. DUBUISSON dans Le Nouveau Traité de Chimie Minérale, publié sous la direction de P. PASCAL, Tome XV, fascicule 1, 1960, Masson et Cie, page 187 et J.H. BUDDERY dans Metallurgy and Fuels, 1956, vol. 4, pages 24-32, afin d'améliorer la décantation de l'uranium métal, l'oxyde d'uranium (par exemple UO₂) est réduit en présence de sels fondus, par exemple MgCl₂/MgF₂ ou MgCl₂/NdCl₃. La récupération du métal a lieu dans une nappe d'alliage fondu ZnMg ou CuMg. L'UO₂ est ajouté dans le milieu biphasique, agité et chauffé à 750°C, constitué de l'alliage fondu (ZnMg) et du mélange de sels fondus (MgCl₂/NdCl₃) . Une partie du magnésium réduit l'UO₂ en formant U et MgO. MgO réagit ensuite avec le chlorure de néodyme en donnant du chlorure de magnésium et de l'oxyde de néodyme. Quant à l'uranium métal, il est incorporé dans la phase ZnMg. A l'arrêt de l'agitation du milieu réactionnel les phases se séparent. La phase métallique, plus dense, se dépose au fond du creuset. Après refroidissement et solidification, les phases sont séparées mécaniquement. L'uranium métal est ensuite séparé par évaporation de ZnMg. Mg est régénéré par électrolyse du sel.

Ainsi selon US-A-5 290 337, la réduction d'UO₂ par Mg a lieu dans un mélange biphasique sous agitation. Le principe de deux phases distinctes n'apparaît qu'à l'issue du processus qui ne peut être qu'un système discontinu ("batch process"). Ce procédé présente donc l'inconvénient de ne pas fournir directement et de façon continue l'uranium métal en sortie de creuset. Deux étapes supplémentaires sont nécessaires pour séparer les constituants : une séparation mécanique des phases puis une distillation. De plus, avant électrolyse et régénération de Mg le bain est forcément refondu et il ne peut pas être recyclé ensuite à moins d'introduire une étape de chloruration de l'oxyde de néodyme.

Depuis les années 1960, la fusion et le tirage en continu de lingots ont fait l'objet de nombreuses études, publications et brevets. Le métal est généralement introduit directement dans le creuset de tirage. Son élaboration a lieu dans d'autres structures, par exemple par électrolyse, métallothermie, ou réduction par métalloïde (carbone, soufre).

L'article "Economically Producing Reactive Metals by Aérosol Réduction" par J.D. LELAND, paru dans la revue J.O.M., pages 52-55, octobre 1996, divulgue un procédé d'obtention de titane, hafnium, ou zirconium en semi-continu à partir de leurs sels précurseurs (chlorures). Le procédé de réduction par aérosols consiste en une réaction entre deux jets de produits. Le métal réducteur (par exemple Na ou Mg) est sous forme d'aérosol entre 400 et 600°C et le chlorure du métal à réduire est sous forme vapeur. Grâce à l'exothermicité de la réaction, le chlorure formé est vaporisé alors que le métal solide tombe dans un pied de bain métallique liquide. La température du milieu est stabilisée aux environs du point d'ébullition du sel formé, typiquement 1100-1200°C. Le métal est rassemblé et fondu à partir du pied de bain dans un creuset froid inductif. Ce procédé présente deux inconvénients principaux qui sont la nécessité d'avoir une réaction exothermique permettant la vaporisation de la scorie et du produit de départ n'ayant pas réagi, et la difficulté de maîtrise des débits d'alimentation. En outre, ce procédé ne serait pas applicable dans le cas de réactions exothermiques présentant le risque d'atteindre la température d'inversion thermodynamique ou dont la température d'ébullition de la scorie est supérieure à cette dernière.

Le document EP-A-0 521 608 divulgue un procédé de métallothermie et de tirage en continu d'un produit métallique comprenant la réduction de chlorure d'uranium par le magnésium, le sodium ou le calcium en présence de sels fondus contenant des chlorures de métaux légers comme par exemple des chlorures de lithium, de magnésium ou de sodium. La réaction est effectuée dans un réacteur où le solvant, c'est-à-dire les sels fondus, est maintenu à une température inférieure à 750°C. Le chlorure d'uranium en poudre et le réducteur sous forme de particules, en l'occurrence le magnésium, sont introduits respectivement dans le réacteur par les conduits d'amenée. La réaction de réduction entre le magnésium et le chlorure d'uranium se produit et le magnésium n'ayant pas réagi immédiatement se dissout dans le milieu solvant. En raison de la température des sels fondus qui est au-dessus de la température de fusion du magnésium, il se forme une couche de magnésium fondu surnageant sur le milieu solvant. La réaction de réduction se produit alors à la fois avec le magnésium de la nappe surnageante et avec celui présent dans le milieu solvant. L'uranium formé est à l'état solide et décante dans le milieu solvant jusqu'au fond du réacteur. L'uranium est alors soutiré du réacteur par un conduit situé sous le réacteur pour être ensuite séparé des sels fondus par filtration ou fusion.

Le document FR-A-2 708 725 divulgue un procédé de fusion d'un matériau électro-conducteur dans un four de fusion par induction en creuset froid. Le four de fusion est constitué d'un premier creuset à parois froides équipé de moyens de chauffage par induction et de moyens d'introduction de matériau, et d'un deuxième creuset à parois froides appelé "tube de coulée" équipé de moyens de chauffage par induction, disposé sous le premier creuset, la partie supérieure du deuxième creuset communiquant avec la partie inférieure du premier creuset, la partie inférieure du deuxième creuset étant pourvue d'un orifice permettant l'évacuation de produit métallique en continu.

Le document FR-A-2 688 516 divulgue un dispositif pour la fabrication de métaux et d'alliages de métaux de grande pureté. Le dispositif comporte un creuset refroidi qui est entouré par une bobine d'induction.

Le document GB-A-2 279 543 divulgue un creuset possédant deux bobines d'induction destiné à la fusion d'une couche solide de matériau électriquement conducteur pour obtenir une coulée de matériau fondu homogène.

### Exposé de l'invention

L'invention remédie aux inconvénients de l'art antérieur cité ci-dessus en proposant une solution qui permet une élaboration complète, en continu, à partir du sel ou de l'oxyde métallique jusqu'au métal préformé.

L'invention a donc pour objet un procédé de métallothermie et de tirage en continu d'un produit métallique, constitué par au moins un métal, comprenant :
- une étape d'élaboration du métal par la réduction d'oxyde ou de sel dudit métal dans un milieu réducteur constitué par une nappe surnageante de matière en fusion et où le métal formé décante dans un milieu solvant, plus dense que le milieu réducteur et moins dense que le métal formé, non miscible avec le milieu réducteur et le métal formé, constitué par un bain d'au moins un sel fondu permettant d'absorber les scories résultant de la réaction de réduction ;
- une étape de rassemblement et de fusion du métal décantant permettant d'obtenir un tirage en continu du produit métallique ;
caractérisé en ce que :
- l'étape d'élaboration du métal est réalisée dans un premier creuset froid chauffé par induction, le débit maximal d'alimentation de la nappe surnageante en oxyde ou en sel dudit métal étant déterminé par l'épaisseur de la nappe surnageante et la température de sa surface supérieure afin que la réduction de l'oxyde ou du sel dudit métal s'effectue totalement dans la nappe surnageante ;
- l'étape de rassemblement et de fusion est réalisée dans un deuxième creuset froid chauffé par induction et situé sous le premier creuset froid.

Cette détermination du débit maximal d'alimentation peut être le résultat d'essais et/ou d'une modélisation procurant des abaques. Le milieu réducteur surnageant permet de parfaitement maîtriser la température et d'éviter la réversibilité des réactions.

Le chauffage par induction du premier creuset et du deuxième creuset peut se faire à des fréquences différentes.

Le milieu réducteur peut comprendre une matière choisie parmi un métal, un mélange de métaux, un métalloïde, un mélange de métalloïdes.

L'oxyde ou le sel dudit métal à élaborer peut être introduit dans le premier creuset froid au-dessus de la nappe si cet oxyde ou ce sel est à l'état solide ou à l'état liquide. L'oxyde ou le sel dudit métal à élaborer peut être introduit dans le premier creuset froid sous la nappe si cet oxyde ou ce sel est à l'état gazeux.

Dans le cas où le produit métallique à élaborer est un alliage d'au moins deux métaux, le premier creuset froid peut être alimenté par un mélange d'oxyde(s) ou de sel(s) de ces deux métaux. En variante, l'un de ces métaux est introduit dans le premier creuset froid directement sous sa forme métallique, l'autre de ces métaux étant introduit sous forme d'oxyde ou de sel.

Avantageusement, le procédé comprend en outre une étape de régénération du milieu réducteur par électrolyse de la scorie présente dans le milieu solvant. Le soutirage du milieu solvant est réalisé en continu.

Le procédé selon la présente invention s'applique particulièrement bien à l'obtention d'uranium métal ou d'un alliage d'uranium.

Si le composé d'uranium que l'on réduit est l'oxyde UO₂ ou l'oxyde U₃O₈, le milieu réducteur peut être constitué de lithium, le milieu solvant peut comprendre au moins l'un des sels suivants : LiCl, KCl, BaCl₂, LiF, CaF₂, et BaF₂. Si le composé d'uranium que l'on réduit est UF₄, le milieu réducteur peut être constitué par un métal choisi parmi Ca, Mg, Li, K, Na ou par un mélange Ca-Mg, le milieu solvant peut comprendre au moins l'un des sels suivants : MgF₂, MgCl₂, LiCl, KCl, BaCl₂, LiF, KF, CaCl₂, CaF₂, NaF, NaCl et BaF₂. Si le composé d'uranium que l'on réduit est un fluorure double d'uranium et d'un élément alcalin ou alcalino-terreux, le milieu réducteur peut être un métal choisi parmi Ca, Mg, Li, Na ou K, ou un mélange d'au moins deux de ces métaux réducteurs, le milieu solvant peut comprendre au moins l'un des sels suivants : MgF₂, MgCl₂, LiCl, KCl, NaCl, NaF, BaCl₂. LiF, KF, CaF₂, CaCl₂ et BaF₂. Si le composé d'uranium que l'on réduit est Cs₂UCl₆, le milieu réducteur peut être un métal choisi parmi Ca, Mg ou Li ou un mélange d'au moins deux de ces métaux réducteurs, le milieu solvant peut comprendre au moins l'un des sels suivants : Licl, KCl, CsCl, BaCl₂, LiF, CaF₂, BaF₂, MgF₂ et MgCl₂.

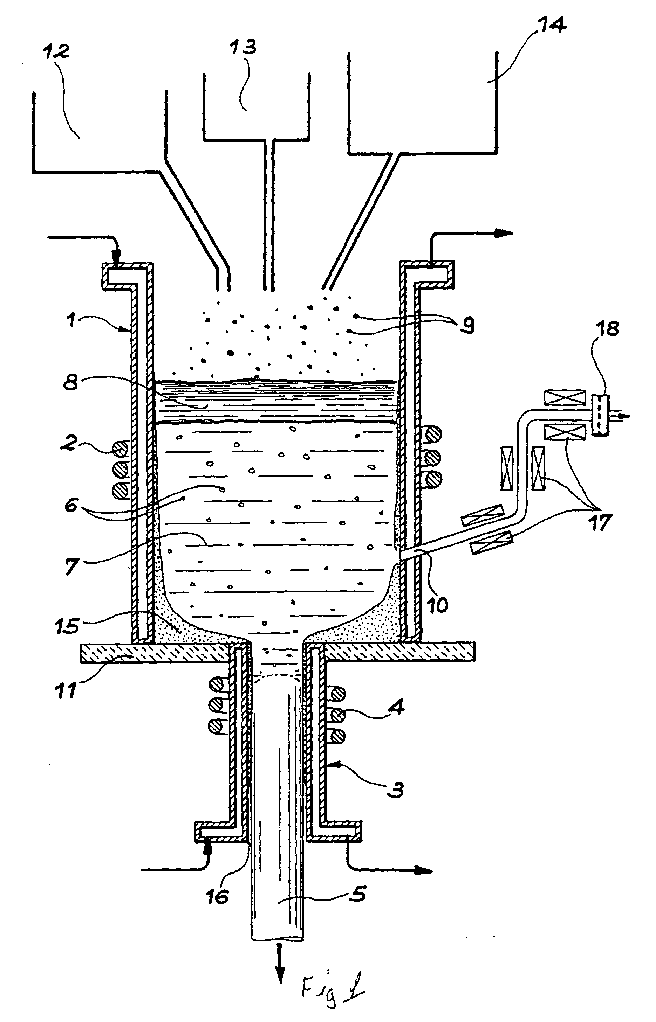

### Brève description du dessin

L'invention sera mieux comprise et d'autres avantages et particularités apparaîtront à la lecture de la description qui va suivre, donnée à titre d'exemple non limitatif, accompagnée de la figure annexée qui est une vue en coupe longitudinale d'un dispositif comportant deux creusets à parois froides utilisé pour la mise en oeuvre du procédé selon la présente invention.

### Description détaillée d'un mode de réalisation de l'invention

La métallothermie et le tirage de métaux ou d'alliages selon l'invention ont lieu dans deux creusets froids inductifs de tailles différentes (hauteur, diamètre, géométrie). L'originalité réside dans le fait que les deux creusets sont superposés et qu'il y a parfaite continuité entre les deux étapes du procédé.

L'élaboration du métal a lieu par réduction d'un oxyde ou d'un sel de ce métal dans le creuset supérieur. L'agent réducteur peut être par exemple un métal ou un mélange de métaux plus réducteurs que celui à produire, ou un métalloïde : carbone ou soufre. Un milieu solvant assure la décantation du métal formé, par exemple un sel fondu ou un métal liquide non miscible avec le réducteur et le métal formé. Le rassemblement et le tirage du lingot sont assurés par le creuset froid inductif inférieur dont le diamètre ou la section est déterminé en fonction de la mise en forme recherchée : fil, barres, etc.

Le procédé selon l'invention s'applique en particulier pour l'obtention de métal par réduction métallothermique et séparation en bain de sels fondus. Le sel ou l'oxyde est réduit dans une nappe de métal réducteur (corps pur ou mélange) en fusion surnageant un bain de sels fondus. Le réducteur est choisi pour sa capacité de réduction, sa densité et l'absence d'alliage avec le métal à produire. Ce dernier traverse donc la couche de métal réducteur puis décante dans le bain de sels fondus. Le sel fondu est déterminé en fonction de plusieurs critères dont sa capacité de solubilisation de la scorie, sa densité, sa stabilité par rapport aux différents métaux en présence, et ses températures de fusion et d'ébullition. La scorie étant solubilisée par le sel, le métal est obtenu pur en bas du creuset réactionnel et est fondu puis tiré dans le creuset inductif inférieur à partir d'un pied de bain liquide.

Une variante du procédé consiste à réduire un mélange de sels ou d'oxydes de métaux différents et à tirer directement un alliage de ces métaux. L'un des métaux peut être aussi avantageusement introduit sous forme solide (poudre métallique).

Par rapport à l'art antérieur, la séparation physique des zones de réduction et de fusion par une zone tampon de sel fondu (plus dense que le métal réducteur et moins dense que le métal à récupérer), permet d'envisager des réactions pour lesquelles la température d'inversion thermodynamique serait atteinte en système "batch" du fait de l'exothermicité ou de la fusion du métal produit. Le bain de sel intermédiaire permet d'imposer un gradient thermique au système tel que la température est plus élevée en bas du premier creuset. D'autre part, la mise en oeuvre de la réaction en creuset froid inductif assure l'évacuation éventuelle du surcroît de calories générées par la réaction dans la couche de métal réducteur. L'exothermicité de la réaction envisagée est donc maîtrisable. Il est aussi important de noter que dans ce procédé il n'est pas indispensable qu'elle soit élevée.

La figure annexée est une vue en coupe longitudinale des creusets froids utilisés pour la mise en oeuvre du procédé selon l'invention, par exemple de réduction d'un oxyde par un métal réducteur. Elle comprend un premier creuset froid 1 de forme cylindrique surmontant un deuxième creuset froid 3 de forme également cylindrique mais de diamètre inférieur. Les creusets 1 et 3 sont assemblés par une plaque de céramique 11 sur laquelle est posée le creuset 1. Un orifice dans la plaque 11 permet la mise en place du deuxième creuset froid 3. La proximité des systèmes de refroidissement des deux creusets froids permet la formation d'un autocône de décantation 15 constitué par du sel solide. Une bobine d'induction haute fréquence 2 est disposée autour du premier creuset 1 et une bobine moyenne fréquence 4 est disposée autour du deuxième creuset 3. Selon l'invention le premier creuset 1 est rempli de sels fondus 7 sur lesquels surnage une nappe de métal réducteur 8. Le composé métallique à traiter 12 est introduit sous forme solide (par exemple en poudre 9) ou liquide sur la nappe de métal réducteur 8. Les particules solides de métal produites 6 décantent dans le bain de sels liquides 7 et sont rassemblées dans le deuxième creuset 3 puis fondues et tirées sous forme d'un lingot 5. Le lingot est évacué par l'orifice 16 en continu. Le bain de sels 7 solubilise la scorie (ou sous-produit) et est évacué par l'orifice 10 réalisé dans le creuset 1. La hauteur de l'orifice de soutirage doit être calculée pour éviter d'entraîner le métal désiré. Les forces électromagnétiques de pression qui s'exercent sur le métal qui décante permettent d'éviter ce phénomène. Cependant, un filtre 18 peut être rajouté sur la conduite de soutirage pour retenir le métal à élaborer dans le premier creuset. Pour éviter de figer la matière dans les conduites d'évacuation du bain vers l'électrolyseur (non représenté), celles-ci sont équipées de systèmes de chauffage inductif ou résistif 17. Après l'électrolyse du bain et de la scorie (non représentée) le métal réducteur 14 d'une part et le sel 13 constitutif du bain d'autre part sont réintroduits dans le réacteur 1.

Dans le cas où le métal désiré est l'uranium, le procédé tel que décrit permet d'obtenir ce métal à partir notamment d'oxydes (UO₂, UO₃, ou U₃O₈) ou de fluorure (UF₄, fluorure double) . Le métal réducteur est Ca, Mg, ou Li seul ou en mélange pour les oxydes et Na, Li, K, Ca ou Mg seul ou en mélange pour le fluorure. Pour l'UF₄ ou un fluorure double d'uranium, la possibilité d'alimentation en phase liquide sera un point très avantageux par rapport à l'art antérieur. La réaction de réduction aura alors lieu dans un système monophasique, liquide-liquide.

Le choix du métal réducteur résulte, outre des impératifs de réactivité avec le composé à réduire, de sa densité en phase liquide par rapport au bain de sels fondus, et des considérations suivantes. La température de fusion du milieu réducteur doit être aussi basse que possible pour permettre une circulation en phase liquide entre l'électrolyseur et le réacteur, et aussi éloignée que possible de la température d'inversion thermodynamique (par exemple en dessous de 850°C Li réduit UO₂, au delà U réduit Li₂O) . La température d'ébullition du métal réducteur sera suffisamment élevée pour laisser un choix de sels compatibles important. Pour les sels, les points importants sont : la température de fusion, leur absence de réactivité avec l'ensemble des métaux en présence dans le domaine de température considéré, et leur capacité à intégrer (solubilité ou mélange) une forte proportion de scories. Ce dernier point a une influence déterminante sur le dimensionnement de l'unité d'électrolyse associée dans la mesure où industriellement, il est préférable d'éviter de se situer dans un système proche de la limite diffusionnelle du composé à électrolyser. La température d'ébullition du bain de sels sera impérativement supérieure à la température de fusion du métal réducteur et du métal produit à la pression de fonctionnement envisagée.

Compte tenu de l'ensemble de ces considérations techniques, dans le cas de la réduction du bioxyde d'uranium, l'utilisation de Li comme métal réducteur est intéressante. Pour le bain de sels, divers mélanges peuvent convenir, à base de LiCl, KCl, BaCl₂, BaF₂, LiF ou CaF₂. Les mélanges retenus, binaires ou ternaires au maximum, ont des températures de fusion inférieures à 500°C ce qui permet d'avoir une température d'interface Li - sels de l'ordre de 600°C.

Le procédé selon la présente invention peut être mis en oeuvre pour obtenir d'autres métaux que l'uranium, seuls ou en mélange à partir de leurs oxydes ou sels. Ces métaux sont notamment Sc, Y, La, Ga, Tl, La, les terres rares (Ce, Pr, Nd, Pm, Sm, Eu, Gd, Tb, Dy, Ho, Er, Tm, Yb, Lu), Be, Ti, Zr, Hf, Si, Ge, V, Nb, Ta, Cr, Fe, Pu, ... La liste n'est pas exhaustive et l'ensemble des éléments de la classification peut faire l'objet d'une application dans le cadre de l'invention.

De même, d'autres agents réducteurs que les alcalins ou alcalino-terreux sont utilisables. Il s'agit soit de métaux plus réducteurs que celui à produire, soit des métalloïdes tels que le carbone ou le soufre.

L'alimentation du composé à traiter est possible à partir de solides ou de liquides au-dessus de la nappe métallique, ou de gaz en dessous de cette nappe.

Dans le cas d'élaboration de matériaux par des métalloïdes, le mélange de sels fondus peut jouer le rôle de solvant de la réaction. Le métalloïde est dispersé dans le bain qui se comporte alors comme un lit fluidisé.

Le procédé s'applique aussi pour l'élaboration et le rassemblement par fusion de matériaux autres que des métaux ou corps purs à partir de leurs oxydes ou sels. Par exemple récupération d'éponges de carbures de bore à partir d'oxyde de bore et de carbone.

## Revendications

1. Procédé de métallothermie et de tirage en continu d'un produit métallique, constitué par au moins un métal, comprenant :
- une étape d'élaboration du métal par la réduction d'oxyde ou de sel dudit métal dans un milieu réducteur (8) constitué par une nappe surnageante de matière en fusion et où le métal formé décante dans un milieu solvant (7), plus dense que le milieu réducteur et moins dense que le métal formé, non miscible avec le milieu réducteur et le métal formé, constitué par un bain d'au moins un sel fondu permettant d'absorber les scories résultant de la réaction de réduction ;
- une étape de rassemblement et de fusion du métal décantant permettant d'obtenir un tirage en continu du produit métallique (5) ;
**caractérisé en ce que** :
- l'étape d'élaboration du métal est réalisée dans un premier creuset froid (1) chauffé par induction, le débit maximal d'alimentation de la nappe surnageante en oxyde ou en sel dudit métal étant déterminé par l'épaisseur de la nappe surnageante et la température de sa surface supérieure afin que la réduction de l'oxyde ou du sel dudit métal s'effectue totalement dans la nappe surnageante ;
- l'étape de rassemblement et de fusion est réalisée dans un deuxième creuset froid (3) chauffé par induction et situé sous le premier creuset froid (1).

2. Procédé selon la revendication 1, **caractérisé en ce que** le chauffage par induction du premier creuset (1) et du deuxième creuset(3) se fait à des fréquences différentes.

3. Procédé selon l'une des revendications 1 ou 2, **caractérisé en ce que** le milieu réducteur (8) comprend une matière choisie parmi un métal, un mélange de métaux, un métalloïde, un mélange de métalloïdes.

4. Procédé selon l'une quelconque des revendications 1 à 3, **caractérisé en ce que** l'oxyde ou le sel dudit métal à élaborer est introduit dans le premier creuset froid (1) au-dessus de la nappe (8) si cet oxyde ou ce sel est à l'état solide ou à l'état liquide.

5. Procédé selon l'une quelconque des revendications 1 à 3, **caractérisé en ce que** l'oxyde ou le sel dudit métal à élaborer est introduit dans le premier creuset froid (1) sous la nappe (8) si cet oxyde ou ce sel est à l'état gazeux.

6. Procédé selon l'une quelconque des revendications 1 à 5, **caractérisé en ce que**, dans le cas où le produit métallique à élaborer est un alliage d'au moins deux métaux, le premier creuset froid (1) est alimenté par un mélange d'oxyde(s) ou de sel(s) de ces deux métaux.

7. Procédé selon l'une quelconque des revendications 1 à 5, **caractérisé en ce que**, dans le cas où le produit métallique à élaborer est un alliage d'au moins deux métaux, l'un de ces métaux est introduit dans le premier creuset froid (1) directement sous sa forme métallique, l'autre de ces métaux étant introduit sous forme d'oxyde ou de sel.

8. Procédé selon l'une quelconque des revendications 1 à 7, **caractérisé en ce qu'**il comprend en outre une étape de régénération du milieu réducteur par électrolyse du milieu solvant.

9. Procédé selon la revendication 8, **caractérisé en ce que**, pour procéder à l'étape de régénération du milieu réducteur, on soutire le milieu solvant en continu.

10. Application du procédé selon la revendication 1 à l'obtention d'uranium métal ou d'un alliage d'uranium.

11. Application selon la revendication 10, **caractérisée en ce que** le composé d'uranium que l'on réduit est l'oxyde UO₂ ou l'oxyde U₃O₈, le milieu réducteur est constitué de lithium, le milieu solvant comprend au moins l'un des sels suivants : LiCl, KCl, BaCl₂, LiF, CaF₂, et BaF₂.

12. Application selon la revendication 10, **caractérisée en ce que** le composé d'uranium que l'on réduit est UF₄, le milieu réducteur est constitué par un métal choisi parmi Ca, Mg, Li, K, Na ou par un mélange Ca-Mg, le milieu solvant comprend au moins l'un des sels suivants : MgF₂, MgCl₂, LiCl, KCl, BaCl₂, LiF, KF, CaF₂, CaCl₂, NaF, NaCl et BaF₂.

13. Application selon la revendication 10, **caractérisée en ce que** le composé d'uranium que l'on réduit est un fluorure double d'uranium et d'un élément alcalin ou alcalino-terreux, le milieu réducteur est un métal choisi parmi Ca, Mg, Li, Na ou K ou un mélange d'au moins deux de ces métaux réducteurs, le milieu solvant comprend au moins l'un des sels suivants : MgF₂, MgCl₂, LiCl, KCl, NaCl, NaF, BaCl₂, LiF, KF, CaF₂, CaCI₂ et BaF₂.

14. Application selon la revendication 10, **caractérisée en ce que** le composé d'uranium que l'on réduit est Cs₂UCl₆, le milieu réducteur est un métal choisi parmi Ca, Mg ou Li ou un mélange d'au moins deux de ces métaux réducteurs, le milieu solvant comprend au moins l'un des sels suivants : LiCl, KCl, CsCl, BaCl₂, LiF, CaF₂, BaF₂, MgF₂ et MgCl₂.

## Claims

1. Process for metallothermy and continuously drawing off a metallic product constituted by at least one metal comprising:
- a stage of producing the metal by reduction of oxide or the salt of said metal in a reducing medium (8) constituted by a supernatant, molten material layer and where the metal formed settles in a solvent medium (7), which is denser than the reducing medium and less dense than the metal formed not being miscible with the reducing medium and the metal formed, constituted by a bath of at least one melted salt making it possible to absorb the slag resulting from the reduction reaction,
- a collecting and melting stage with respect to the settling metal making it possible to continuously draw off the metallic product (5),
**characterized in that**:
- the metal production stage is performed in a first cold crucible (1) heated by induction, the maximum supply rate of the supernatant layer with oxide or salt of said metal being determined by the thickness of the supernatant layer and the temperature of its upper surface, so that the reduction of the oxide or the salt of said metal takes place entirely in the supernatant layer,
- the stage of collecting and melting is performed in a second cold crucible (3) heated by induction and located below the first cold crucible (1).

2. Process according to claim 1, **characterized in that** the induction heating of the first crucible (1) and the second crucible (3) takes place at different frequencies.

3. Process according to claim 1 or 2, **characterized in that** the reducing medium (8) includes a material chosen among a metal, a mix of metals, a metalloid or a mix of metalloids.

4. Process according to any one of claims 1 to 3, **characterized in that** the oxide of the salt of the said metal to be produced is added into the first cold crucible (1) above the layer (8) if this oxide or salt is in the solid state or the liquid state.

5. Process according to any one of claims 1 to 3, **characterized in that** the oxide or salt of the said metal to be produced may be added into the first cold crucible (1) under the layer (8) if this oxide or salt is in the gaseous state.

6. Process according to any one of claims 1 to 5, **characterized in that**, if the metallic product to be produced is an alloy of at least two metals, the first cold crucible (1) is fed by a mix of oxide(s) or salt(s) of these two metals.

7. Process according to any one of claims 1 to 5, **characterized in that**, if the metallic product to be produced is an alloy of at least two metals, one of these metals is added into the first cold crucible (1) directly in its metallic form, the other of these metals being added in the form of an oxide or salt.

8. Process according to any one of claims 1 to 7, **characterized in that** it also comprises a step in which the reducing medium is regenerated by electrolysis of the solvent medium.

9. Process according to claim 8, **characterized in that** the solvent medium is continuously drawn off to enable the step in which the reducing medium is regenerated.

10. Application of the process according to claim 1 to obtain uranium metal or a uranium alloy.

11. Application according to claim 10, **characterized in that** the uranium compound that is reduced is UO₂ oxide or U₃O₈ oxide, the reducing medium consists of lithium, and the solvent medium comprises at least one of the following salts: LiCl, KCl, BaCl₂, LiF, CaF₂ and BaF₂.

12. Application according to claim 10, **characterized in that** the uranium compound that is reduced is UF₄, the reducing medium is composed of a metal chosen among Ca, Mg, Li, K, Na or a Ca-Mg mix, the solvent medium comprises at least one of the following salts: MgF₂, MgCl₂, LiCl, KCl, BaCl₂, LiF, KF, CaF₂, CaCl₂, NaF, NaCl and BaF₂.

13. Application according to claim 10, **characterized in that** the uranium compound that is reduced is a double fluoride of uranium and an alkali or alkali earth element, the reducing medium is a metal chosen among Ca, Mg, Li, Na or K, or a mix of at least two of these reducing metals, and the solvent medium includes at least one of the following salts: MgF₂, MgCl₂, LiCl, KCl, NaCl, NaF, BaCl₂, LiF, KF, CaF₂, CaCl₂ and BaF₂.

14. Application according to claim 10, **characterized in that** the uranium compound that is reduced is Cs₂Ucl₆, the reducing medium is a metal chosen among Ca, Mg or Li or a mix of at least two of these reducing metals, the solvent medium comprises at least one of the following salts: LiCl, KCl, CsCl, BaCl₂, LiF, CaF₂, BaF₂, MgF₂ and MgCl₂.

## Patentansprüche

1. Verfahren für eine metallothermische Reaktion und ein kontinuierliches Abziehen eines metallischen Produkts, das aus mindestens einem Metall besteht, das die folgenden Stufen umfasst:
eine Stufe der Gewinnung des Metalls durch die Reduktion des Metalloxids oder -salzes in einem Reduktionsmittel (8), das aus einer einem Schmelzmaterial aufschwimmenden Schicht besteht und wobei sich das gebildete Metall in einem Lösemittel (7), das dichter als das Reduktionsmittel und weniger dicht als das gebildete Metall ist und mit dem Reduktionsmittel und
dem gebildeten Metall nicht mischbar ist, das aus einem Bad aus mindestens einem geschmolzenen Salz, das ein Absorbieren der bei der Reduktionsreaktion entstandenen Schlacke ermöglicht, besteht, absetzt;
eine Stufe des Sammelns und Zusammenschmelzens des sich absetzenden Metalls, wodurch ein kontinuierliches Abziehen des metallischen Produkts (5) erreicht werden kann;
**dadurch gekennzeichnet, dass**:
die Stufe der Gewinnung des Metalls in einem ersten radioaktivitätsfreien Tiegel (1), der durch Induktion beheizt wird, durchgeführt wird, wobei die maximale Zufuhrmenge des Metalloxids oder -salzes zur aufschwimmenden Schicht durch die Dichte der aufschwimmenden Schicht und die Temperaturen deren oberer Oberfläche derart bestimmt wird, dass die Reduktion des Metalloxids oder -salzes vollständig in der aufschwimmenden Schicht erfolgt;
die Stufe des Sammelns und Zusammenschmelzens in einem zweiten radioaktivitätsfreien Tiegel (3), der durch Induktion beheizt wird und sich unter dem ersten radioaktivitätsfreien Tiegel (1) befindet, durchgeführt wird.

2. Verfahren nach Anspruch 1, **dadurch gekennzeichnet, dass** das Beheizen durch Induktion des ersten Tiegels (1) und des zweiten Tiegels (3) bei unterschiedlichen Frequenzen erfolgt.

3. Verfahren nach einem der Ansprüche 1 oder 2, **dadurch gekennzeichnet, dass** das Reduktionsmittel (8) ein Material, das aus einem Metall, einem Metallgemisch, einem Nichtmetall, einem Nichtmetallgemisch ausgewählt ist, umfasst.

4. Verfahren nach einem der Ansprüche 1 bis 3, **dadurch gekennzeichnet, dass** das Oxid oder das Salz des zu gewinnenden Metalls in den ersten radioaktivitätsfreien Tiegel (1) über der Schicht (8) eingeführt wird, wenn dieses Oxid oder dieses Salz im festen Zustand oder im flüssigen Zustand ist.

5. Verfahren nach einem der Ansprüche 1 bis 3, **dadurch gekennzeichnet, dass** das Oxid oder das Salz des zu gewinnenden Metalls in den ersten radioaktivitätsfreien Tiegel (1) unter der Schicht (8) eingeführt wird, wenn dieses Oxid oder dieses Salz im gasförmigen Zustand ist.

6. Verfahren nach einem der Ansprüche 1 bis 5, **dadurch gekennzeichnet, dass** für den Fall, dass das zu gewinnende metallische Produkt eine Legierung aus mindestens zwei Metallen ist, dem ersten radioaktivitätsfreien Tiegel (1) eine Mischung aus einem Oxid bzw. Oxiden oder einem Salz bzw. Salzen dieser beiden Metalle zugeführt wird.

7. Verfahren nach einem der Ansprüche 1 bis 5, **dadurch gekennzeichnet, dass** für den Fall, dass das zu gewinnende metallische Produkt eine Legierung aus mindestens zwei Metalllen ist, das eine dieser Metalle in den ersten radioaktivitätsfreien Tiegel (1) direkt in metallischer Form eingeführt wird und das andere dieser Metalle in der Form eines Oxids oder Salzes eingeführt wird.

8. Verfahren nach einem der Ansprüche 1 bis 7, **dadurch gekennzeichnet, dass** es ferner eine Stufe der Regeneration des Reduktionsmittels durch Elektrolyse des Lösemittels umfasst.

9. Verfahren nach Anspruch 8, **dadurch gekennzeichnet, dass** zur Durchführung der Stufe der Regeneration des Reduktionsmittels das Lösemittel kontinuierlich abgezogen wird.

10. Verwendung des Verfahrens gemäß Anspruch 1 zur Herstellung von Uranmetall oder einer Uranlegierung.

11. Verwendung nach Anspruch 10, **dadurch gekennzeichnet, dass** die Uranverbindnung, die reduziert wird, das Oxid UO₂ oder das Oxid U₃O₈ ist, das Reduktionsmittel aus Lithium besteht, das Lösemittel mindestens eines der folgenden Salze: LiCl, KCl, BaCl₂, LiF, CaF₂ und BaF₂ umfasst.

12. Verwendung nach Anspruch 10, **dadurch gekennzeichnet, dass** die Uranverbindung, die reduziert wird, UF₄ ist, das Reduktionsmittel aus mindestens einem Metall, das aus Ca, Mg, Li, K, Na ausgewählt ist, oder aus einem Gemisch Ca-Mg besteht, das Lösemittel mindestens eines der folgenden Salze: MgF₂, MgCl₂, LiCl, KCl, BaCl₂, LiF, KF, CaF₂, CaCl₂ , NaF, NaCl und BaF₂ umfasst.

13. Verwendung nach Anspruch 10, **dadurch gekennzeichnet, dass** die Uranverbindung, die reduziert wird, ein Doppelfluorid von Uran und einem Alkali- oder Erdalkalielement ist, das Reduktionsmittel ein Metall, das aus Ca, Mg, Li, Na oder K ausgewählt ist, oder ein Gemisch von mindestens zwei von diesen reduzierenden Metallen ist, das Lösemittel mindestens eines der folgenden Salze: MgF₂, MgCl₂, LiCl, KCl, NaCl, NaF, BaCl₂, LiF, KF, CaF₂, CaCl₂ und BaF₂ enthält.

14. Verwendung nach Anspruch 10, **dadurch gekennzeichnet, dass** die Uranverbindung, die reduziert wird, Cs₂UCl₆ ist, das Reduktionsmittel ein Metall, das aus Ca, Mg oder Li ausgewählt ist, oder ein Gemisch von mindestens zwei von diesen reduzierenden Metallen ist, das Lösemittel mindestens eines der folgenden Salze: LiCl, KCl, CsCl, BaCl₂, LiF, CaF₂, BaF₂, MgF₂ und MgCl₂ umfasst.
